# EUROPÄISCHE PATENTSCHRIFT

(11) **EP 2 508 382 B1**
(45) Veröffentlichungstag und Bekanntmachung des Hinweises auf die Patenterteilung: **11.12.2013**
(21) Anmeldenummer: 12159548.2
(22) Anmeldetag: 15.03.2012
(51) Int. Cl.: B60K 17/356, B60K 23/08, F16H 61/47, B60K 7/00, B60K 17/10

(54) **Fahrzeug mit hydrostatischem Zusatzantrieb**
Vehicle with hydrostatic auxiliary propulsion
Véhicule doté d'un entraînement auxiliaire hydrostatique

(30) Priorität: 05.04.2011 DE 102011016107
(43) Veröffentlichungstag der Anmeldung: 10.10.2012
(73) Patentinhaber: Robert Bosch GmbH, 70442 Stuttgart (DE)
(72) Erfinder: Anz, Ruprecht, 74251 Lehrensteinsfeld (DE); Schubert, Peter, 74211 Leingarten (DE); Essig, Heinz-Gerhard, 89173 Lonsee (DE)
(74) Vertreter: Thürer, Andreas

(56) Entgegenhaltungen:
- DE-A1- 4 110 161
- DE-C1- 4 212 983
- US-A- 4 444 286
- US-B1- 6 508 328

## Beschreibung

Die Erfindung betrifft ein Fahrzeug mit hydrostatischem Zusatzantrieb gemäß dem Oberbegriff des Patentanspruchs 1.

Bei Fahrzeugen, die auf einem Untergrund mit geringer Traktion und/oder mit großen Steigungen eingesetzt werden, z.B. Lastkraftwagen auf Baustellen, ist es aus dem Stand der Technik bekannt, einer herkömmlich mechanisch angetriebenen Hinterachse des Fahrzeugs eine hydrostatisch angetriebene Vorderachse zuzuschalten.

Die Druckschrift DE 42 12 983 C1 und die Druckschrift DE 41 10 161 C2 zeigen jeweils ein derartiges Antriebskonzept, bei dem ein Verbrennungsmotor mechanisch einerseits eine Hinterachse und zusätzlich eine hydraulische Verstellpumpe antreibt. Von der Verstellpumpe können über einen hydraulischen Kreis Hydromotoren der jeweiligen Vorderräder angetrieben werden.

Die Druckschrift DE 41 10 161 C2 offenbart weiterhin, dass die Druckregelung des hydrostatischen Zusatzantriebes und damit die Drehmomentregelung der Vorderräder zusammen mit der Drehmomentregelung der Hinterräder über ein Fahrpedal des Fahrzeugs erfolgt.

Dabei ist bei auftretendem Schlupf (insbesondere bei Fahrt auf rutschigem Untergrund oder auf einer Steigung) keine Einflussnahme auf den Schlupf der Vorderachse und keine Regelung des Schlupfverhältnisses zwischen den Achsen möglich.

Aus der gattungsgemäßen US 4 444 286 ist ein Motorgrader bekannt, dessen hinteren Räder über eine Welle direkt von einem Verbrennungsmotor angetrieben werden und der einen hydrostatischer Zusatzantrieb umfassend eine in ihrem Fördervolumen verstellbare Hydropumpe und einen Hydromotor konstanten Schluckvolumens für den Antrieb der Vorderräder aufweist. Für den Zusatzantrieb ist ein erster Betriebsmodus vorgesehen, in dem die Vorderräder mit einer geringfügig kleineren Drehzahl als die Hinterräder angetrieben werden. In einem zweiten Betriebsmodus werden die Vorderräder mit einer gegenüber der Drehzahl der Hinterräder leicht höheren Drehzahl angetrieben.

Dem gegenüber liegt der Erfindung die Aufgabe zu Grunde, ein Fahrzeug mit hydrostatischem Zusatzantrieb zu schaffen, das eine Regelung des Schlupfverhältnisses zwischen einem mechanisch angetriebenen Rad und einem über den hydrostatischen Zusatzantrieb angetriebenen Rad oder zwischen den entsprechenden Achsen ermöglicht.

Diese Aufgabe wird gelöst durch ein Fahrzeug mit hydrostatischem Zusatzantrieb mit den Merkmalen des Patentanspruchs 1.

Das offenbarte Fahrzeug hat einen Fahrzeugantrieb mit einem Verbrennungsmotor zum Antrieb zumindest eines ersten Rades oder einer ersten Achse und einen hydrostatischen Zusatzantrieb zum Antrieb zumindest eines zweiten Rades oder einer zweiten Achse. Wenn gewünscht hat dabei der hydrostatische Zusatzantrieb eine vom Verbrennungsmotor angetriebene verstellbare Hydropumpe und zumindest einen hydraulisch daran gekoppelten Hydromotor. Ein Schwenkwinkel der Hydropumpe ist erfindungsgemäß unter Einbeziehung oder Berücksichtigung eines änderbaren Drehzahloffsets einstellbar. Der Dehzahloffset ist eine Drehzahldifferenz zwischen dem ersten und dem zweiten Rad oder zwischen den entsprechenden Achsen und kann positiv oder negativ sein. Damit ist eine Regelung des Schlupfverhältnisses zwischen dem ersten Rad und dem zweiten Rad ermöglicht. Wenn der Drehzahloffset größer Null ist, eilt das zweite Rad dem ersten Rad mit positivem Schlupf vor, oder das erste Rad dreht mit negativem Schlupf langsamer als das zweite Rad. Wenn der Drehzahloffset kleiner Null ist, dreht das zweite Rad mit negativem Schlupf langsamer als das erste Rad, oder das erste Rad eilt dem zweiten Rad mit positivem Schlupf vor. Allgemein ist durch die Einflussnahme auf die Schlupfverhältnisse eine Stabilisierung der Fahrt des Fahrzeugs ermöglicht. Z.B. bei Kurvenfahrt wird durch den einstellbaren Drehzahloffset ein Schieben über die Vorderräder vermieden. Gemäß der Erfindung ist der Drehzahloffset von einem Winkel des Fahrpedals abhängig. Dazu kann ein Spannungssignal eines Fahrpedalpotentiometers genutzt werden. Somit kann ein Fahrer des Fahrzeugs auf den Drehzahloffset je nach Fahrsituation auf einfache Weise Einfluss nehmen.

Vorteilhafte Weiterbildungen der Erfindung sind in Gegenstand von Unteransprüchen.

Bei einem Ausführungsbeispiel der Erfindung werden zwei Vorderräder vom hydrostatischen Zusatzantrieb und zwei Hinterräder mechanisch angetrieben. Dabei werden die Vorderräder, wenn das Fahrpedal stark durchgetreten ist, mit einem vergleichsweise großen Drehzahloffset angetrieben, so dass ihr Schlupf vergleichsweise groß ist, z.B. 5%. Wenn das Fahrpedal schwach durchgetreten ist, werden die Vorderräder mit einem vergleichsweise geringen Drehzahloffset angetrieben, so dass ihr Schlupf vergleichsweise gering ist, z.B. 2%.

Vorzugsweise kann in Ergänzung zur Abhängigkeit des Drehzahloffsets von der Stellung des Fahrpedals eine Abhängigkeit des Drehzahloffsets von einer Drehzahl einer Kurbelwelle des Verbrennungsmotors bestehen. Wenn eine Abhängigkeit vom Winkel des Fahrpedals und von der Drehzahl der Kurbelwelle besteht, dann kann z.B. bei einem gering getretenem Fahrpedal (Winkel ca. 0°) und bei einer Drehzahl nahe einer Leerlaufdrehzahl davon ausgegangen werden, dass das Fahrzeug mit konstanter Geschwindigkeit weiterfahren soll. Dazu werden (beim oben genannten Ausführungsbeispiel mit zwei hydraulisch angetriebenen Vorderrädern) die Vorderräder mit einem geringen Drehzahloffset angetrieben, so dass ihr Schlupf gering ist, z.B. 1%.

Eine bevorzugte Weiterbildung des Fahrzeugs hat eine Kupplung und ein Getriebe, die im Kraftfluss zwischen dem Verbrennungsmotor und dem ersten Rad oder der ersten Achse angeordnet sind. Dabei besteht auch eine Abhängigkeit des Drehzahloffsets von Kennwerten der Kupplung, insbesondere "eingekuppelt" oder " ausgekuppelt", und/oder von Kennwerten des Getriebes, insbesondere vom gewählten oder automatisch geschalteten Gang. Wenn z.B. bei der Berechnung des Drehzahloffsets Anhängigkeiten vom Fahrpedal, von der Kurbelwellendrehzahl und vom gewählten Gang bestehen, kann bei hoher Drehzahl der Kurbelwelle und bei nicht getretenem Fahrpedal (Winkel = 0°) und bei kleinem gewählten Gang davon ausgegangen werden, dass der Fahrer das Fahrzeug abbremsen will, z.B. bei Bergabfahrt. Dann wird ein negativer Drehzahloffset aus- bzw. vorgegeben, so dass (beim oben genannten Ausführungsbeispiel) ein negativer Schlupf an den Vorderrädern entsteht.

Bei einer besonders bevorzugten Weiterbildung sind die Abhängigkeiten von der Stellung des Fahrpedals und gegebenenfalls von der Drehzahl, der Kupplung und dem Getriebe elektronisch in einem Kennfeld hinterlegt. Damit kann zeitnah zu jedem Betriebszustand des Fahrzeugs ein Drehzahloffset aus- bzw. vorgegeben werden.

Vorzugsweise ist der Schwenkwinkel der Hydropumpe über einen Drehzahlregler einstellbar, dessen Sollgröße eine Drehzahl des ersten Rades oder der ersten Achse zuzüglich dem Drehzahloffset ist und dessen Istgröße eine Drehzahl des zweiten Rades oder der zweiten Achse ist.

Bei einer bevorzugten Variante ist die Hydropumpe im Kraftfluss auf der Abtriebsseite des Getriebes angeordnet. Damit wirkt sich der jeweilige Gang des Getriebes direkt auf die Antriebsdrehzahl der Hydropumpe aus und ist damit erheblich für die Regelgröße "Schwenkwinkel" des Drehzahlreglers.

Bei einer anderen bevorzugten Variante ist die Hydropumpe im Kraftfluss auf der Abtriebsseite des Verbrennungsmotors und auf der Antriebsseite des Getriebes angeordnet. Damit ist der momentane Gang des Getriebes - abgesehen von der der optionalen Berücksichtigung bei der Ermittlung des Drehzahloffsets - prinzipiell unerheblich für die Antriebsdrehzahl der Hydropumpe und damit für die Regelgröße "Schwenkwinkel" des Drehzahlreglers.

Bei einem bevorzugten Anwendungsfall ist das Fahrzeug ein Lastkraftwagen (LKW), der auf Untergrund mit geringer Traktion gefahren wird, so dass der erfindungsgemäß geregelte hydrostatische Zusatzantrieb benötigt wird.

Im Folgenden werden anhand der Figuren zwei Ausführungsbeispiele der Erfindung detailliert beschrieben. Es zeigen:
Figur 1 eine Prinzipskizze eines erfindungsgemäßen LKW's mit einem hydrostatischen Zusatzantrieb gemäß einem ersten Ausführungsbeispiel und
Figur 2 eine schematische Darstellung eines LKW mit einem Schaltplan eines erfindungsgemäß optimierten hydrostatischen Zusatzantriebes gemäß einem zweiten Ausführungsbeispiel.

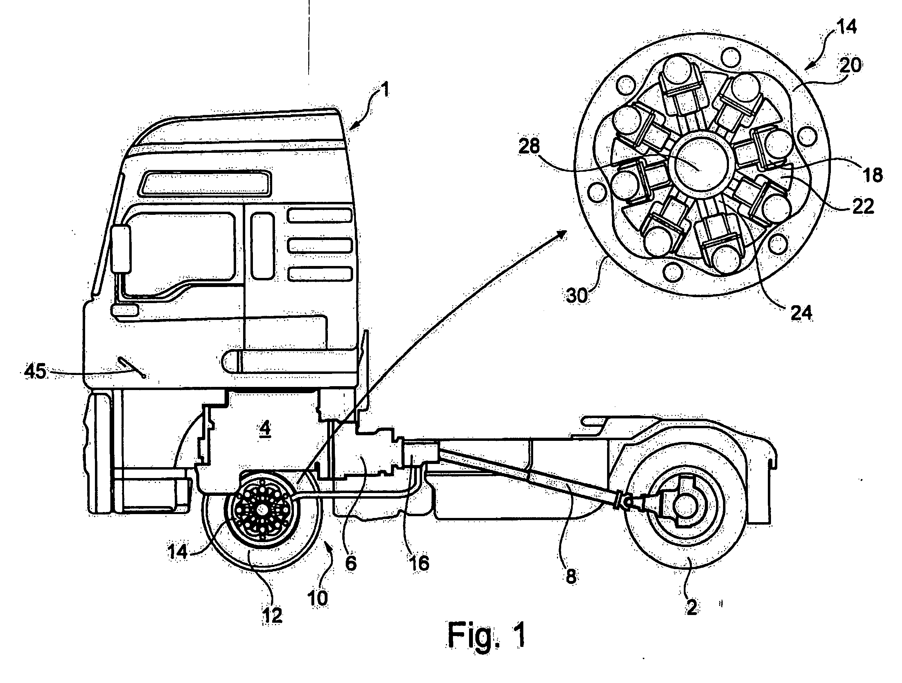

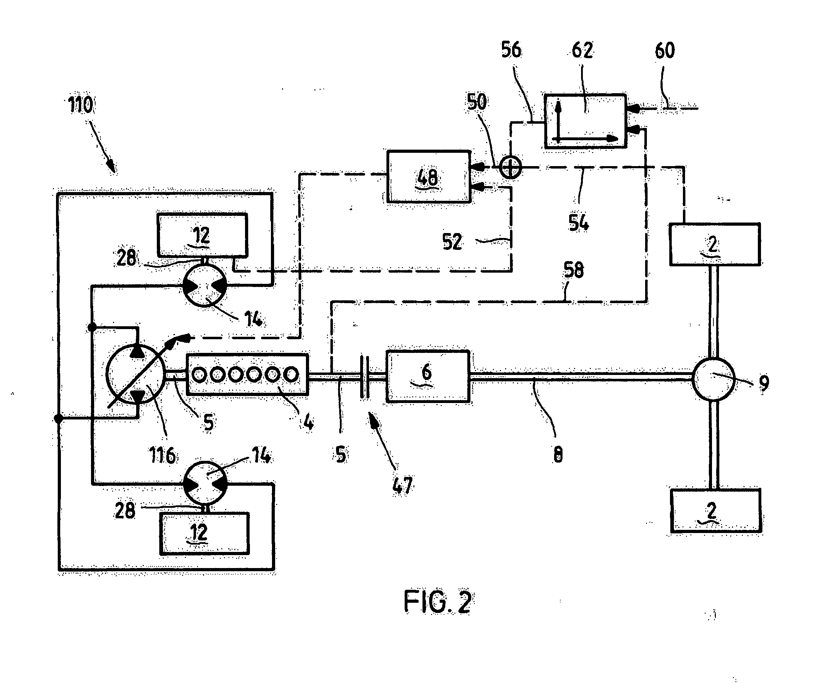

Figur 1 zeigt eine schematisierte Darstellung eines LKW's 1, dessen Hinterräder 2 über einen konventionellen mechanischen Antriebsstrang mit Verbrennungsmotor 4, Getriebe 6, Kardanwelle 8 sowie Differenzial 9 (vgl. Figur 2), etc. angetrieben werden. Der LKW 1 ist mit einem hydrostatischen Zusatzantrieb 10 ausgeführt, der wahlweise beispielsweise im schweren Gelände zugeschaltet werden kann. Dieser Zusatzantrieb 10 hat für jedes Vorderrad 12 einen Hydromotor 14, der über eine vom Verbrennungsmotor 4 angetriebene Pumpenaggregat bzw. eine verstellbare Hydropumpe 16 mit Druckmittel versorgt wird. Diese ist im Kraftfluss hinter dem Getriebe 6 angeordnet, so dass seine Drehzahl vom Gang des Getriebes 6 abhängt.

Gemäß dem vergrößerten Teilausschnitt eines der beiden Hydromotoren 14 in Figur 1 sind diese als inverse Radialkolbentriebwerke ausgeführt, wobei eine Vielzahl von Kolben 18 an einem Hubring 20 abgestützt sind.

Die Kolben 18 sind radial verstellbar in Zylinderbohrungen einer Zylindertrommel 22 geführt und begrenzen jeweils einen Arbeitsraum 24 einer Vielzahl von Arbeitsräumen, wobei die Arbeitsräume 24 aufeinander folgend mit Hochdruck und Niederdruck verbunden werden. Auf Grund des daraus resultierenden Kolbenhubs dreht die Zylindertrommel 22, wobei die Kolben 18 über Rollen 26 am Hubring 20 abrollen. Die Zylindertrommel 22 ist drehfest mit einer Antriebswelle 28 verbunden, die praktisch die Radachse des jeweiligen Vorderrades 12 bildet. Der Hydromotor 14 bildet eine Art "Radlager" des jeweiligen Vorderrades 12.

In der im vergrößerten Teilausschnitt der Figur 1 dargestellten Position liegen die Kolben 18 am Hubring 20 an, so dass bei nicht angesteuertem bzw. eingeschaltetem hydrostatischem Zusatzantrieb 10 und "leer" mitlaufenden Hydromotoren 14 erhebliche Reibungsverluste auftreten können. Zur Minimierung dieser Reibungsverluste können die Hydromotoren 14 in einem Free-Wheel-Modus betrieben werden. Dazu wird ein den Hubring 20 tragendes Motorgehäuse 30 mit einem Druck, beispielsweise einem Speisedruck, beaufschlagt, während die Arbeitsräume 24 mit dem Tankdruck oder einem sonstigen niedrigeren Druck beaufschlagt bzw. entlastet sind. Durch die Druckdifferenz werden die Kolben 18 in Richtung zur Antriebswelle 28 eingefahren und somit vom Hubring 20 abgehoben - die Reibungsverluste sind dementsprechend erheblich reduziert.

Figur 1 zeigt weiterhin ein Fahrpedal 45, das im Innern einer Fahrerkabine angeordnet ist, und über das ein Fahrer den Verbrennungsmotor 4 steuert. Damit steuert er auch die Drehzahl der mechanisch gekoppelten verstellbaren Hydropumpe 6, deren Schwenkwinkel elektronisch von einem Drehzahlregler 48 (vgl. Figur 2) eingestellt wird. Erfinddungsgemäß berücksichtigt dieser Drehzahlregler 48 dabei ein Drehzahloffset bzw. eine Drehzahldifferenz zur Drehzahl der Hinterräder 2, um so einen Schlupf der Vorderräder oder ein Schlupfverhältnis zwischen der Vorderachse und der Hinterachse des LKW's 1 zu regeln.

Figur 2 zeigt eine schematische Darstellung eines zweiten Ausführungsbeispiels eines Fahrwerks und Verbrennungsmotors 4 eines erfindungsgemäßen LKW's und einen Schaltplan eines hydrostatischen Zusatzantriebes 110. Von dem Verbrennungsmotor 4 werden in herkömmlicher Weise über die Kurbelwelle 5, eine Kupplung 47, das Getriebe 6 und über das Differenzial 9 die beiden Hinterräder 2 angetrieben.

Weiterhin wird eine verstellbare Hydropumpe 116 direkt über die Kurbelwelle 5 vom Verbrennungsmotor 4 angetrieben. Man erkennt die beiden Vorderräder 12, die jeweils über einen Hydromotor 14 von der verstellbaren Hydropumpe 116 angetrieben werden. Die entsprechende Druckmittelversorgung erfolgt über zwei Arbeitsanschlüsse und über eine (nicht gezeigte) Ventilanordnung.

Die Verstellung des Schwenkwinkels der Hydropumpe 116 erfolgt mittels eines (nicht gezeigten) Stellzylinders. Dazu ist die Hydropumpe 116 an eine (nicht gezeigte) Steuerölversorgung angeschlossen. Der Stellzylinder wird über einen Drehzahlregler 48 eingestellt, dessen Sollgröße mit dem Drehzahlsignal 50 und dessen Istgröße mit dem Drehzahlsignal 52 symbolisiert sind. Das Drehzahlsignal 52 der Istgröße meldet die momentane Drehzahl des Vorderrades 12. Das Drehzahlsignal 50 der Sollgröße ergibt sich aus der Summe eines momentanen Drehzahlsignals 54 des Hinterrades 2 und einem erfindungsgemäßen Drehzahloffset 56, also einer positiven oder negativen gewünschten Abweichung zwischen den Drehzahlen des Vorderrades 12 und des Hinterrades 2. Zur Berechnung des Drehzahloffsets 56 werden einerseits ein momentanes Drehzahlsignal 58 der Kurbelwelle 5 und weiterhin ein Fahrerwunschsignal 60, das einem Winkel des Fahrpedals 45 (vgl. Figur 1) entspricht, herangezogen. Die Berechnung des Drehzahloffsets 56 erfolgt über ein Kennfeld 62, das zu jedem Wertepaar einen vorbestimmten Drehzahloffset 56 ausgibt.

Ergänzend zu den gezeigten Ausführungsbeispielen können auch der Betriebszustand der Kupplung 47 und der gewählte bzw. automatisch geschaltete Gang des Getriebes 6 im Kennfeld 62 berücksichtig sein, so dass der Drehzahloffset 56 und damit der Schlupf diese beiden Größen zusätzlich mit berücksichtigt.

Bei den beiden beschriebenen Ausführungsbeispielen werden bei einer Bergabfahrt oder bei einer Bremsung oder bei einer hohen Beladung im vorderen Bereich des LKW 1 oder bei griffigerem Untergrund der beiden Vorderräder 12 diese eine höhere Traktion haben als die beiden Hinterräder 2. Das bedeutet, dass der erfindungsgemäß regelbare Drehzahloffset zu Schlupf an den beiden Hinterrädern 2 führen wird.

## Patentansprüche

1. Fahrzeug, das einen Fahrzeugantrieb mit einem Verbrennungsmotor (4) zum Antrieb zumindest eines ersten Rades (2) oder einer ersten Achse und einen hydrostatischen Zusatzantrieb (10; 110) zum Antrieb zumindest eines zweiten Rades (12) oder einer zweiten Achse hat, wobei der hydrostatische Zusatzantrieb (10; 110) eine vom Verbrennungsmotor (4) antreibbare verstellbare Hydropumpe (16; 116), deren Schwenkwinkel unter Einbeziehung eines änderbaren Drehzahloffsets (56) einstellbar ist, und zumindest einen Hydromotor (14) hat, **dadurch gekennzeichnet, dass** der Drehzahloffset (56) von einem Winkel des Fahrpedals (45) abhängig ist.

2. Fahrzeug nach Patentanspruch 1 mit einer Abhängigkeit des Drehzahloffsets (56) von einer Drehzahl einer Kurbelwelle (5) des Verbrennungsmotors (4).

3. Fahrzeug nach Patentanspruch 1 oder 2 mit einer Kupplung (47) und mit einem Getriebe (6), die im Kraftfluss vom Verbrennungsmotor (4) zum ersten Rad (2) oder zur ersten Achse angeordnet sind, und mit einer Abhängigkeit des Drehzahloffsets (56) von Kennwerten der Kupplung (47) und/oder von Kennwerten des Getriebes (6).

4. Fahrzeug nach einem der Patentansprüche 1 bis 3, wobei die Abhängigkeit elektronisch in einem Kennfeld (62) hinterlegt ist.

5. Fahrzeug nach einem der vorhergehenden Patentansprüche, wobei der Schwenkwinkel über einen Drehzahlregler (48) einstellbar ist, dessen Sollgröße (50) einer Drehzahl des ersten Rades (2) oder der ersten Achse plus Drehzahloffset (56) entspricht, und dessen Istgröße (52) einer Drehzahl des zweiten Rades (12) oder der zweiten Achse entspricht.

6. Fahrzeug nach einem der Patentansprüche 3 bis 5, wobei die Hydropumpe (16) auf der Abtriebsseite des Getriebes (6) angeordnet ist.

7. Fahrzeug nach einem der Patentansprüche 3 bis 5, wobei die Hydropumpe (116) auf der Abtriebsseite des Verbrennungsmotors (4) und auf der Antriebsseite des Getriebes (6) angeordnet ist.

8. Fahrzeug nach einem der vorhergehenden Patentansprüche, das ein Lastkraftwagen (LKW) (1) ist.

## Claims

1. Vehicle which has a vehicle drive with an internal combustion engine (4) for driving at least a first wheel (2) or a first axle and a hydrostatic auxiliary drive (10; 110) for driving at least a second wheel (12) or a second axle, wherein the hydrostatic auxiliary drive (10; 110) has an adjustable hydraulic pump (16; 116) which can be driven by the internal combustion engine (4) and whose pivot angle can be set with the inclusion of an alterable rotational speed offset (56), and has at least one hydraulic motor (14), **characterized in that** the rotational speed offset (56) is dependent on an angle of the accelerator pedal (45).

2. Vehicle according to Patent Claim 1, having dependence of the rotation speed offset (56) on a rotational speed of a crankshaft (5) of the internal combustion engine (4).

3. Vehicle according to Patent Claim 1 or 2, having a clutch (47) and having a transmission (6), which are arranged in the force flux from the internal combustion engine (4) to the first wheel (2) or to the first axle, and having dependence of the rotational speed offset (56) on characteristic values of the clutch (47) and/or on characteristic values of the transmission (6).

4. Vehicle according to one of Patent Claims 1 to 3, wherein the dependence is stored electronically in a characteristic diagram (62).

5. Vehicle according to one of the preceding patent claims, wherein the pivot angle can be set by means of a rotational speed controller (48), the setpoint value (50) of which corresponds to a rotational speed of the first wheel (2) or of the first axle plus the rotational speed offset (56), and the actual value (52) of which corresponds to a rotational speed of the second wheel (12) or of the second axle.

6. Vehicle according to one of Patent Claims 3 to 5, wherein the hydraulic pump (16) is arranged on the output side of the transmission (6).

7. Vehicle according to one of Patent Claims 3 to 5, wherein the hydraulic pump (116) is arranged on the output side of the internal combustion engine (4) and on the drive side of the transmission (6).

8. Vehicle according to one of the preceding patent claims, which vehicle is a lorry (1).

## Revendications

1. Véhicule comprenant un entraînement de véhicule avec un moteur à combustion interne (4) pour l'entraînement d'au moins une première roue (2) ou d'un premier essieu et un entraînement auxiliaire hydrostatique (10 ; 110) pour l'entraînement d'au moins une deuxième roue (12) ou d'un deuxième essieu, l'entraînement auxiliaire hydrostatique (10 ; 110) présentant une pompe hydraulique (16 ; 116) réglable pouvant être entraînée par le moteur à combustion interne (4), dont l'angle de pivotement peut être ajusté en tenant compte d'un décalage de régime variable (56), et au moins un moteur hydraulique (14), **caractérisé en ce que** le décalage de régime (56) dépend d'un angle de la pédale d'accélération (45).

2. Véhicule selon la revendication 1, comprenant une dépendance du décalage de régime (56) par rapport à un régime d'un vilebrequin (5) du moteur à combustion interne (4).

3. Véhicule selon la revendication 1 ou 2, comprenant un embrayage (47) et une transmission (6), lesquels sont disposés dans le flux de forces du moteur à combustion interne (4) à la première roue (2) ou au premier essieu, et comprenant une dépendance du décalage de régime (56) par rapport à des valeurs caractéristiques de l'embrayage (47) et/ou à des valeurs caractéristiques de la transmission (6).

4. Véhicule selon l'une quelconque des revendications 1 à 3, dans lequel la dépendance est consignée sous forme électronique dans un champ caractéristique (62).

5. Véhicule selon l'une quelconque des revendications précédentes, dans lequel l'angle de pivotement peut être ajusté par le biais d'un régulateur de régime (48), dont la grandeur de consigne (50) correspond à une vitesse de rotation de la première roue (2) ou du premier essieu plus le décalage de régime (56), et dont la grandeur réelle (52) correspond à une vitesse de rotation de la deuxième roue (12) ou du deuxième essieu.

6. Véhicule selon l'une quelconque des revendications 3 à 5, dans lequel la pompe hydraulique (16) est disposée du côté de la sortie de la transmission (6).

7. Véhicule selon l'une quelconque des revendications 3 à 5, dans lequel la pompe hydraulique (116) est disposée du côté de la sortie du moteur à combustion interne (4) et du côté de l'entraînement de la transmission (6).

8. Véhicule selon l'une quelconque des revendications précédentes, lequel est un véhicule poids-lourd (LKW) (1).
